(19) Europäisches Patentamt
European Patent Office
Office européen des brevets

(11)  **EP 3 096 276 A1**

(12)  **EUROPEAN PATENT APPLICATION**

(43) Date of publication:
**23.11.2016  Bulletin 2016/47**

(51) Int Cl.:
***G06Q 30/02*** *(2012.01)*

(21) Application number: **15305757.5**

(22) Date of filing: **20.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Morin, Thomas**
**35760 Saint Gregoire (FR)**
• **Leroy, Bertrand**
**35170 Bruz (FR)**
• **Langlois, Tristan**
**35410 Chateaugiron (FR)**

(74) Representative: **Huchet, Anne et al**
**TECHNICOLOR**
**1-5, rue Jeanne d'Arc**
**92130 Issy-les-Moulineaux (FR)**

(54)  **METHOD FOR OPERATING A RECOMMENDER SYSTEM AND CORRESPONDING SYSTEM**

(57)      A method for operating a recommender system generating recommendations for products for a plurality of users is suggested. The system is communicatively connected with a storage and a database. The database stores property value collections of products. The storage contains an individual user profile for each user of the system. Each user profile is composed of a plurality of tolerance intervals of property values, wherein each interval describes an acceptable range of the respective property value. Then, a group of users is selected. For each property value range is identified, wherein the property values within the range are acceptable for the maximum number of users of the selected group of users. Products from the database having the property value contained in the identified range are selected. Finally graphical representations of the selected products are displayed on the display.

Fig.5

EP 3 096 276 A1

# Description

## Technical Field

The present disclosure generally relates to a method and a system providing recommendations to a group of users.

## BACKGROUND

Recommender systems providing users with filtered information attempting to predict the preference of the user are very common and the interest in such systems remains high. The Internet provides so much information to users that it is hardly possible to find anything relevant without assistance of a recommender system. There is an abundance of possible applications for recommender systems ranging from recommending products like books, CDs, videos etc. or services and/or locations like restaurants, shops, or events like sports events, theater plays etc. In any of these applications the recommender system outputs one or several data items representing the products, service, location, and event, respectively. For illustrative purposes the following discussion focuses on the recommendation of multimedia contents as a typical application of the principles of the present disclosure. In the context of recommending multimedia contents it is relevant that home entertainment systems, including television, media centers and mobile devices, are converging with the Internet and providing access to a large number of available sources of content, such as video, movies, TV programs, music, etc. This expansion in the number of available sources and content items necessitates the use of a recommender system.

A conventional recommender system provides recommendations for a single user. E.g. an online shop recommends further products on the basis of previous purchases that the user already made in the past. Recommender systems of this type are well known in the art. Much less common are recommender systems providing recommendations for a group of users. For instance, a group of people are connected in a social network and plan to go to the cinema together. The recommender system is supposed to recommend a film that meets the interests or preferences of the group as a whole. But how shall the interest of the group be determined? The simple "average" of the individual interests may lead to recommendations that nobody likes.

Hence, there is a need to provide recommendations for groups of users yielding a good level of satisfaction for each member of the group and, in particular, for the group as a whole.

## Summary

According to a first aspect the present disclosure describes a method for operating a recommender system generating recommendations for products for a plurality of users. The system is communicatively connected with a storage and a database. The database stores property value collections of products. The storage contains an individual user profile for each user of the system. Each user profile is composed of a plurality of tolerance intervals of property values, wherein each interval describes an acceptable range of the respective property value. Then, a group of users is selected. For each property value a range is identified, wherein the property values within the range are acceptable for the maximum number of users of the selected group of users. Products from the database having the property value contained in the identified range are selected. Finally, graphical representations of the selected products are displayed on a display. The method generates recommendations which satisfy a majority of users.

According to an embodiment the method further comprises providing access to the recommended products. Providing access is particularly important if the products relate to multimedia content items such as video and/or audio content. However, providing access also includes displaying online shop websites which offer any kind of product for sale.

In an implementation of the method it has been found useful to associate each property value with a numeric value characterizing a property of the product. In this implementation it is particularly simple to realize the concept of tolerance intervals for property values.

According to an embodiment of the present disclosure the method further comprises replacing a tolerance interval of property values in a user profile by a place holder if not enough data are available to determine the tolerance interval.

An alternative embodiment enables manual selection of default values for tolerance intervals composing a user profile. In yet another alternative embodiment a currently still unknown tolerance interval in one user profile for property value is replaced by the allowed range of the property value. Finally, in one embodiment a currently still unknown tolerance interval in one user profile for a property value is replaced by the average values of the lower and upper limits of tolerance intervals known from other user profiles. It depends on the context which one of the proposed embodiments is preferable.

In a further implementation the method comprises receiving a special user request identifying at least one property value and permitting a deviation of the at least one identified property value outside the tolerance interval to maximize the number of users who are supposedly satisfied with a recommendation. This implementation adds additional flexibility to the method.

According to a second aspect the present disclosure relates to a computer program comprising program code instructions executable by a processor for implementing the method according to the present disclosure.

According to the third aspect of the present disclosure a recommender system is proposed. The recommender system generates recommendations for products for a plurality of users. The system is communicatively connected with a storage and a database. The database stores property value collections of products. The storage contains individual user profiles for each user of the system. Each user profile is composed of a plurality of tolerance intervals of property values. Each interval describes an acceptable range of the respective property value. The system comprises a processor which is adapted for

- correlating property values of products with all individual user profiles;

- selecting a group of users;

- identifying a range for each property value which is acceptable for the maximum number of users of the selected group of users;

- selecting products from the database having a corresponding property value contained in the identified range; and

- displaying graphical representations of the selected products on the display.

Brief Description of the Drawings

These, and other aspects, features and advantages of the present disclosure will be described or become apparent from the following description of the embodiments, which is to be read in connection with the accompanying drawings. It shows:

FIG. 1 a block diagram depicting an exemplary recommender system, in accordance with an embodiment of the present principles;

FIG. 2 a block diagram depicting an exemplary system that has multiple user devices connected to a recommendation engine, in accordance with an embodiment of the present principles;

Fig. 3 a graphical representation of a specific user profile of user U1;

Fig. 4 tolerance intervals of a group of 10 users for product property value k;

Fig. 5 tolerance intervals of a group of 10 users in which the total range of all tolerance intervals is subdivided into 5 sections;

Fig. 6 a similar diagram like in Fig. 4 for another group of 10 users; and

Fig. 7 a flow diagram illustrating the method according to the present disclosure.

In the drawings like reference numerals denote similar elements.
It should be understood that the figures are for purposes of illustrating the concepts of the disclosure and are not necessarily the only possible configuration for illustrating the disclosure.

Description of Embodiments

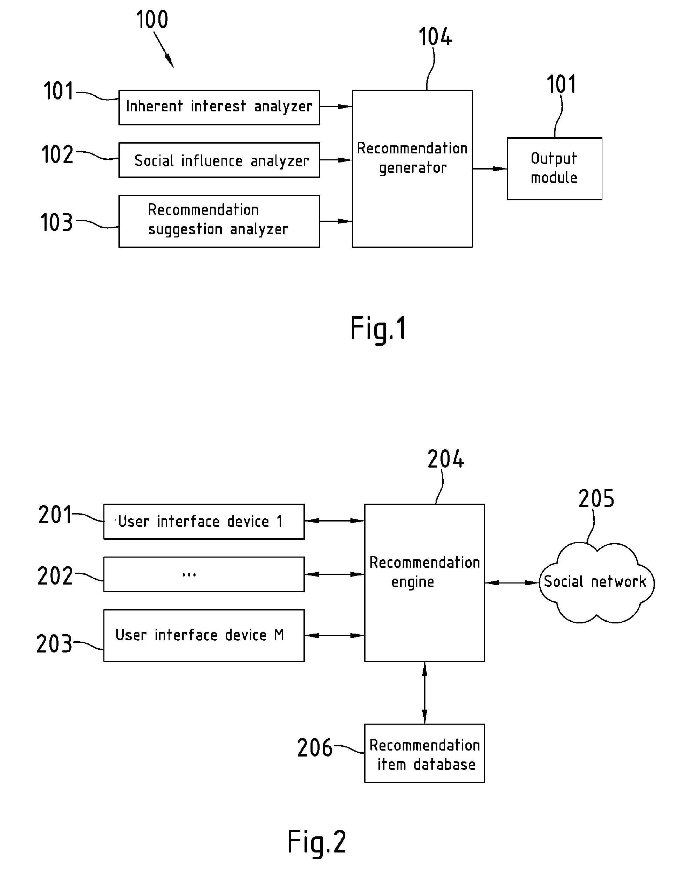

FIG. 1 depicts a block diagram of an exemplary recommender system 100. Inherent interest analyzer 101 analyzes inherent interests of users in the system, from user profiles or training data. Social influence analyzer 102 identifies the social circle of a user, for example, through a social network, and analyzes how the social circle affects a user. Recommendation suggestion analyzer 103 analyzes how a user responds to the recommendations, for example, to determine whether the users in the recommender system are attraction dominant or aversion dominant. In addition, recommendation suggestion analyzer may also analyze whether, and how much, a user desires for novelty. Considering the inherent interest, social influence, how users respond to recommendations, and/or a user's desire for novelty, recommendation generator 104 generates recommendations. The recommendations are output at output module 205, for example, to users in the system.
Inherent interest analyzer 101, social influence analyzer 102, and recommendation suggestion analyzer 103 can be located either in a central location (for example, in a server or the cloud) or within customer premise equipment (for example, set-top boxes or home gateways). Recommendation generator 104 is usually located at a central location, as it aggregates information from other modules, possibly dispersed across multiple equipments at different users' home premises.
FIG. 2 illustrates an exemplary system 200 that has multiple user devices connected to a recommendation engine according to the present principles. In FIG. 2, one or more user devices (201, 202, 203) can communicate with recommendation engine 204. The recommendation engine is connected to multiple users, and each user may communicate with the recommendation engine through multiple user devices. The user interface devices may be remote controls, smart phones, personal digital assistants, display devices, computers, tablets, computer terminals, digital video recorders, or any other wired or wireless devices that can provide a user interface.
For the sake of completeness it is noted that several users may also connect to the recommendation engine 204 via a single user device. Conversely, one single user can connect to the recommendation engine 204 with several user devices, e.g. with a smart phone and a tablet computer. The actual hardware setting is not essential for the present disclosure as long as each individual user is associated with an account on the recommendation engine 204.

The recommendation engine 204 may also correspond to other modules in recommender system 100. Recommendation engine 204 may also interact with social network 205, for example, to determine social influence. Recommendation item database 206 contains one or more databases that can be used as a data source for recommendations items.

In one embodiment, a user device may request a recommendation to be generated by recommendation engine 204. Upon receiving the request, the recommendation engine 204 analyzes the users' inherent interests (for example, obtained from the requesting user device or another user device that contains user profiles), users' social interactions (for example, through access to a social network 205) and users' interactions with the recommender system. After the recommendation is generated, the recommendation item database 206 provides the recommended item to the requesting user device or another user device (for example, a display device).

The present principles can be used in any recommender system. It can be used for recommending books, movies, products, news, restaurants, activities, people, groups, articles, and blogs. The described recommender system provides a basis for user recommendations derived according to various principles. In the following the principles of recommendations according to the present disclosure will be described in greater detail.

The recommendation engine 204 is apt for implementing methods of the present disclosure which are described further below.

An exemplary recommendation for a user, e.g. for films, builds on an interest profile for the user. The interest profile of a given user is composed of a set of values wherein each value is a measure how much a user is interested in a certain property of the film. Each value can be determined e.g. by means of the Likert scale ranging from 1 to 5 corresponding to a range from low to high interest of the user. Mathematically, this user profile is expressed as a vector u, the components $u_i$ of which are the before mentioned values, i.e. $\vec{u} = (u_1, ..., u_n)$ if the vector $\vec{u}$ has n components. The user profile evolves over time based on the selections the user made in the past.

Similarly, each content is characterized by feature values. Mathematically, the content is represented by a feature vector v, the components of which are the feature values $v_i$ of the content. Hence, the feature vector can be expressed as $\vec{v} = (v_1, ..., v_n)$ if the feature vector v has n components.

Common recommender systems work on the basis of a utility function, such as the inner product of the user profile u and the feature vector $\vec{v}$:

$$F = \sum_{i=1}^{n} ui\ vi \text{ or F} = <u|v>$$

The typical recommender system attempts to maximize the utility function F=<u|v> for a given user by calculating the utility function for many different feature vectors $\vec{v}$.

The so far described recommendation approach has its limitations. If the evolution of the user profile is based on the standard deviation for the specific product property this may lead to content recommendations which are not well focused.

For instance, a specific user watches a movie having a comedy rating of 10%. The next day the same user watches a movie with a comedy rating of 90% because the user is actually not very sensitive to the comedy rating. A simple recommendation system might recommend to this user the next time only movies with (10%+90%) / 2 = 50% of comedy rating. Thus, the recommendation excludes many films only because their comedy rating deviates from 50%. In order to at least partially alleviate this kind of problem, tolerance margins are generally applied to the average values of property ratings to retrieve a collection of products to better match the user's taste. In one embodiment the tolerance margin for the property "comedy" could be 10%. Hence, in the previously example of a recommendation system which takes the average of previous selections of the user will make recommendations for movies with a rating between 40% and 60% by applying the tolerance margin.

The situation becomes complicated in case a such construed recommendation system makes recommendations for a group of users. Typically, the profile of a group of users is generally an average based profile of all users which may lead to recommended products or films which do not suit anybody. Even worse, some users may outright disgust the recommended products or films because the group profile which is composed of individual user profiles having different tolerance thresholds may lay outside the tolerance range of these users.

In other words, conventional group recommendations are conceived as building profiles and calculating the group recommendations as a sequence of cumulated approximations: averages of averages with tolerance thresholds. In many cases the recommendations, which are built on such kind of systems are not satisfactory.

According to an embodiment of the present disclosure products are characterized by a collection of measurable property values. The property values correspond e.g. to values from the before mentioned Likert scale. However, the present disclosure is not limited to the Likert scale. Any metric that consistently converts a property of a product into a numeric value independent of the type of product is suitable for the implementation of the present disclosure. For a product A such as a film this looks like $\{AP_1, AP_2, ..., AP_n\}$ if there are n available property values $AP_i$ for product A. It is noted that the collection of property values is not represented as a vector.

For another product B the collection of measurable property values looks alike, namely

$$\{BP_1, BP_2, ..., BP_n\}$$

if there are n available property values $BP_i$ for product B.

In the present embodiment all product property collections have the same length, i.e. for all products there are n measurable property values. Property values having the same index number refer to the same property of the product. If for a specific product one or several product values are not available, these property values are set to zero (0) to obtain the same length for all property value collections. However, setting a non-available property value to zero (0) is only a matter of choice and in other embodiments other values may be chosen. In any case the main objective is to obtain the same length of all property value collections.

Now, after having described product value collections, user profiles will be described. In the present embodiment a user profile is composed of a collection of property values preferred by the user. But instead of using a single property value for each property in the user profile, the present embodiment suggests to build a tolerance interval for each property. The tolerance interval corresponds to a range of the respective property values $P_i$ which is acceptable for the user. Each tolerance interval is delimited by a minimum value $P_{i,min}$ on the low side and by a maximum value $P_{i,max}$ on the high side. For the purpose of illustration it is assumed that property values range from 1 to 100, i.e. $1 \leq P_i \leq 100$.

The tolerance interval is e.g. deduced from previous selections of the user. For instance, if the user previously selected 5 products having property values $P_1$ of 45, 21, 2, 68, and 22 the corresponding tolerance interval is $[P_{i,min}, P_{i,max}] = [2, 68]$.

Alternatively, the tolerance interval can be defined by manual selection or default values. The complete user profile for user $U_1$ looks as follows:

User $U_1$ $\{[P_{1,min}, P_{1,max}], ..., [P_{n,min}, P_{n,max}]\}$.

Apparently, the user profile of user $U_1$ is composed of n tolerance intervals.

According to an improvement of the present disclosure exceptional outliers of property values are ignored for the generation of the tolerance interval. For instance, previously selected products have a specific property value of 2, 40, 41, 40, 42, 43, 50, 44, 51, and 100, respectively. The outliers 2 and 100 are ignored. Thus, the tolerance interval for this user and the specific property value is [40, 51]. The details of the algorithm for determining the tolerance interval are not the subject matter of the present disclosure.

Especially when a user has only recently started to use the recommender system according to the present disclosure his or her user profile is most likely incomplete in the sense that for some property values the corresponding tolerance interval is not yet available. The recommender system copes with this situation by inserting a placeholder for the still missing tolerance interval until the corresponding tolerance interval can be determined. Then, the placeholder is replaced by the tolerance interval, which is updated on a regular basis as the user profile evolves over time. For the purpose of recommending a specific product, the placeholder does not impose any restriction with regard to the corresponding property value of a product. In other words, any property value, for which a placeholder is assigned in the user profile, is deemed to be acceptable for the user. The following example 1 illustrates that:

Example1:

User U1: {[6,12], [11,31], null, [20,80], [17,42]}

Product A: {9, 17, 100, 60, 22}

Product B: {8, 13, 1, 77, 29}

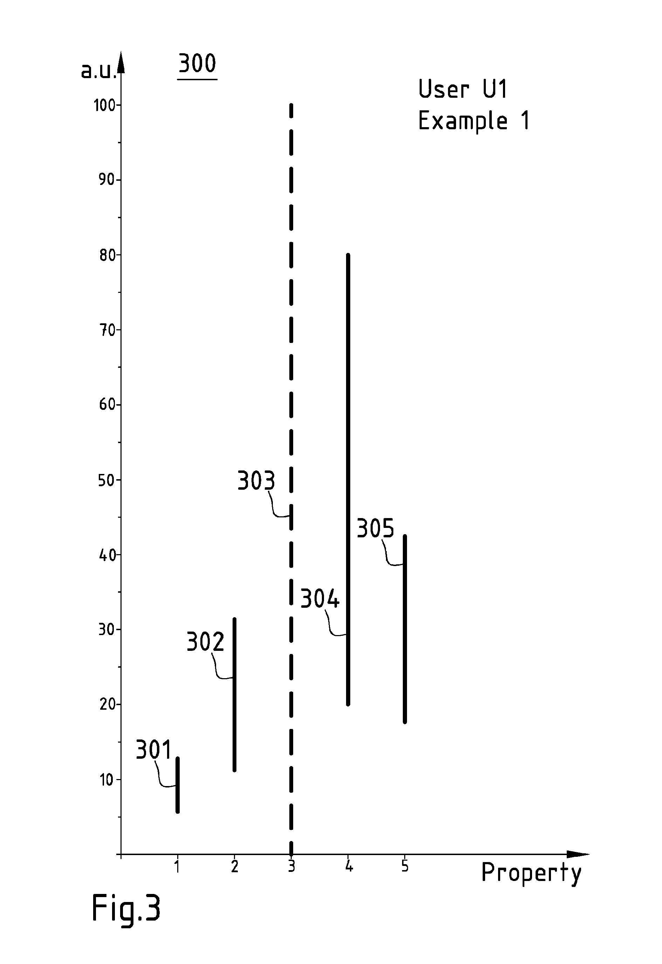

Fig. 3 shows a graphical representation 300 of the user profile of user U1 of example 1. Fig. 3 exhibits the tolerance intervals of user U1 as bars 301 to 305. For the third property the user profile of user $U_1$ contains only a placeholder ("null"), which is represented in Fig. 3 as a dashed bar 303 which extends across the allowable range of property values from 0 to 100. This symbolizes that any value for the third property is acceptable for user U1 in example 1. Consequently, both products A and B will be recommended to user U1 because their first, second, fourth, and fifth property values lay within the corresponding tolerance interval of user U1. Even though, the third property values of products A and B correspond to the minimum and maximum, respectively, of the allowed range of property values, both products are recommended because according to the user profile in example 1 any value of third property value is acceptable.

A similar approach is chosen for product value collections. If for a specific product one or several property values are not known or not available, the corresponding property value collection is filled up with placeholders so that the property value collection contains again the same number of property values. Any variable can be selected as placeholder, e.g. "null". For a specific product A the property value collection looks as follows

Product A {15, null, 66, null, null}.

In this example the property value collection contains 5 property values in which the second, fourth and fifth property values are replaced by placeholders. The presence of a placeholder instead of the specific numeric property value has the consequence that this particular property is disregarded for the recommendation of this product A. In other implementations of the recommender system placeholders may be handled differently.

To further illustrate the principles of the recommender system according to the present disclosure, some examples are considered in greater detail.

Example 2 shows in the user profile for user U1 and the property value collections for products A and B.

Example 2:

User U1: {[2,68], [14,25], [50,70], [36,38], [1,97]}

Product A: {15, null, 66, null, null}

Product B: {null, null, null, 43, null}

All numerically available property values of product A, namely the first and the third one, are within the corresponding tolerance intervals of user U1. In mathematical terms this can be noted as $15 \in [2,68]$ and $66 \in [15,70]$. Contrary to that, the fourth property value of product B is not contained in the corresponding tolerance interval of the user U1, which can be expressed in mathematical terms $43 \notin [36,38]$. In consequence, only product A is recommended to user U1 but not product B.

In an alternative embodiment the lower and upper limits of the still unknown tolerance interval are set by default to the minimum and maximum value of the allowed range of property values. Then the user profile of user U1 of the previous example 1 is noted as example 3 and looks like

Example 3:

User U1: {[6,12],[11,31],[0,100],[20,80],[17,42]}.

In yet another embodiment the lower and upper limits of the still unknown tolerance interval are set to average values of the lower and upper limits of the tolerance intervals of other users. The average lower interval limit is noted as CrowdAvgmin and the average upper interval limit is noted as CrowdAvgmax. Then the user profile of user U1 of the previous example 1 is noted as example 4 and looks like

Example 4:

User U1: {[6,12],[11,31], [CrowdAvgmin,CrowdAvgmax],[20,80],[17,42]}.

Finally, the practical implementation of how to deal with an unknown tolerance interval depends on whether the recommendation system shall make few or many recommendations. Accordingly, unknown tolerance intervals are handled in a more restrictive or more permissive way.

So far embodiments of the recommender system for individual users have been described. The principles of the recommender systems are expanded to a system for making group recommendations. It will become apparent that the use of tolerance intervals is particularly advantageous when it comes to group recommendations.

Two different user profiles are considered in example 5 as a starting point to explain the creation of a group profile.

Example 5:

User U1 {[2,68], [14,25], [50,70], [36,78], [1,97]}

User U2 {[13,33], [10,62], [2,44], [41,80], [5,33]}.

In a first approach, which is denoted as intersection model, the group profile is composed of tolerance intervals re-presenting the overlap or intersection of the corresponding tolerance intervals of the individual users. If there is no overlap of the individual tolerance intervals with the corresponding tolerance interval of the group profile is filled with a placeholder. Thus, the group profile of the intersection model for users U1 and U2 looks as follows:

Example 6:

GROUP intersection {[13,33], [14,25], null, [41,78], [5,33]}

In a second approach, which is denoted as union model, the tolerance intervals of the group profile correspond to the interval containing the individual tolerance intervals. Hence, the group profile for users U1 and U2 that is built according to the rules of the union model looks like:

Example 7:

GROUP union {[2,68], [10,62], [2,70], [36,80], [1,97]}

According to a third approach, which is denoted as hybrid model, the tolerance intervals of the group profile are defined by the following rule. The lower limit of each tolerance interval of the group profile is the maximum of the lower limits of the corresponding tolerance intervals of all users forming the group. The upper limit of each tolerance interval of the group profile is the minimum of the lower limits of the corresponding tolerance intervals of all users forming the group. The group profile complying with the hybrid model looks as follows:

Example 8:

GROUP hybrid_example {[13,33], [14,25], [44,50], [41,78], [5,33]}.

The most relevant of the three models is the intersection model. In an ideal case all users of the group are regular ones, i.e. each user profile is accurate and so is the group profile. The recommender system exactly knows the product property values to match their tastes. The main disadvantage of the intersection model is when there are a lot of users in the group: The group profile might be so restrictive that no product can be recommended.

The union model can be used to get more recommendations, however, it substantially increases the risk to recommend products with properties not matching the tastes of all users.

The hybrid model is based on the intersection but makes a compromise when a strong disagreement occurs on a product property which is difficult to ignore. The "compromise" method depends on the ecosystem - the previously given example is just one solution among several ones.

Whatever the model is, additional tolerance thresholds can be implemented for a property tolerance intervals - once again, the threshold values depend on the ecosystem. On specific example of this approach is shown as example 9.

Example 9:

   GROUP {[13,33], [14,25], null, [41,78], [5,33]}

   Acceptable product {18, 27, null, null, null}

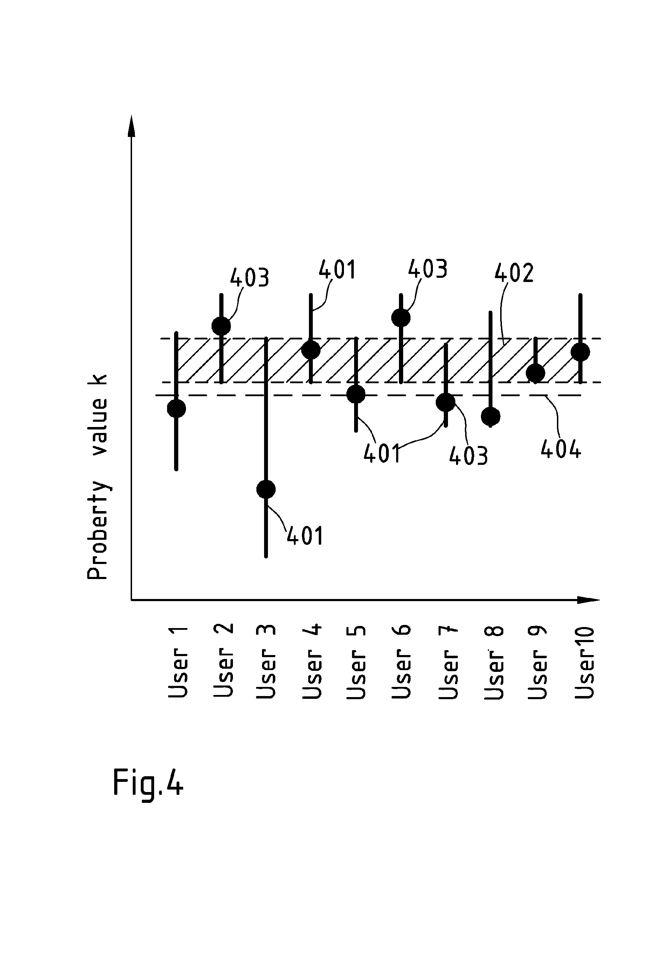

In the following a system for making group recommendations is described, which aims at satisfying most of the members of a group instead of trying to nearly satisfy everyone. This group recommendation system provides more results with a better accuracy. In order to explain the system a group with 10 users is considered. In a group of this size it is already difficult to satisfy each member of the group. Fig.4 shows the tolerance intervals symbolized as bars 401 of all users 1 to 10 of the group for product property k as bars. The hatched area 402 shows property values k which are included in the tolerance interval of each user. Thus, the hatched area 402 represents the tolerance interval for property k of the group profile which is determined according to the intersection model. All products having a property value for property k within the interval symbolized by the hatched area 402 are candidates for the recommendation. Thus, a whole range of property values k is acceptable for the recommendation. This is in stark contrast if the group recommendation is solely based on averages as it will be explained below.

The dots 403 on each bar 402 mark the average of property value k for each individual user. Taking the average of all these average values, results in exactly one property value k which is indicated in Fig.4 as dashed line 404. It is noted that this approach for generating a group profile is very restrictive because the recommender system will only recommend products having exactly the property value k corresponding to the dashed line 404. At the same time the recommended products have a property value k which is outside of the tolerance intervals of users 4, 6, 9 and 10. It is, therefore, very likely that the users 4, 6, 9, and 10 are not satisfied by the recommendation made by a recommendation system entirely based on average values. This simple example illustrates the shortcomings of a group profile that is based on average values.

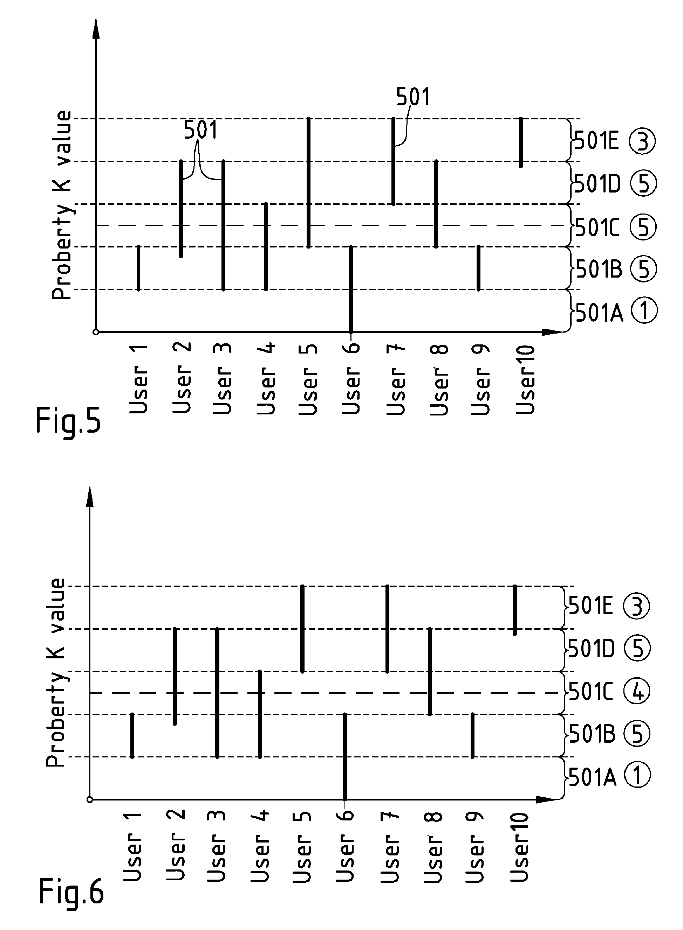

However, it is quite probable that in a group of users there is no range of property values k that is common to all users of the group. Fig.5 exhibits such kind of situation. Between the tolerance intervals of users 6 and 7 there is even a gap. In consequence, it is not possible to recommend a product having a property value k that is acceptable for all users. The recommender system of the present disclosure deals with such a situation by scanning the property value k to find out for each property value how many users are satisfied with it. Depending on the embodiment the scan is performed by very many incremental steps, only a few large steps, or any kind of intermediate approach. At the end of the scan the recommendation engine determines the tolerance interval for the property value k that satisfies most of the users of the group. In the example shown in Fig.6 the beforementioned scan of the property value k includes only 5 steps for the sake of simplicity. I.e. the range between the lowest lower limit of all tolerance intervals and the highest upper limit of all tolerance intervals is segmented into 5 sections 501A...501E. The numbers shown in circles next to the respective sections in Fig.5 identify how many users are satisfied with the corresponding range of property values k. As can be taken from Fig.5 there are 3 adjacent sections 501 B, 501C and 501 D, each satisfying 5 users. The other 2 sections 501 A and 501 E satisfy only 1 and 3 users, respectively. As a result the group profile contains a tolerance interval for property k that equals to the range of property values k that the sequel to the above mentioned 3 adjacent sections 501 B, 501C and 501 D. In other embodiments the sections satisfying most of the users are not adjacent.

Fig.6 illustrates like Fig.5 the corresponding tolerance intervals of other users 1 to 10. In the setting shown in Fig. 6, the segments 501 B and 501 D, which are not adjacent, satisfy 5 users. The remaining segments only satisfy less than 5 users as it is shown in Fig.6. Thus, the group profile for the group shown in Fig.6 contains two separate tolerance intervals for the property value k.

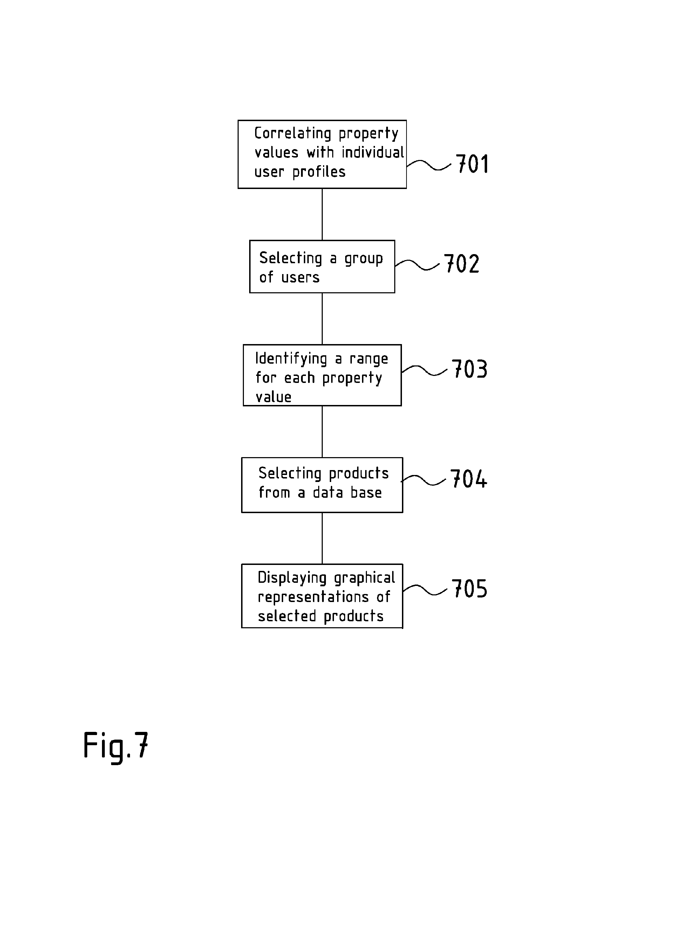

Fig.7 exhibits the flow diagram illustrating the method according to one embodiment of the present disclosure. The method is appropriate for operating the recommender system facilitating access to data items. The system is communicatively connected with storage and a database. The database stores data items associated with meta-data including property values. The storage contains the user profile for each user of the system. Each user profile is composed of a plurality of tolerance intervals of property values. Each interval describes an acceptable range of the respective property value. The method comprises correlating 701 the property values of the product with all sets of user data. Then, a group of users is selected 702. For each property value range is identified 703, wherein the property values within the range are acceptable for the maximum number of users of the selected group of users. Products from the database having a property value contained in the identified range are selected 704. Finally, a graphical representation of the selected products are displayed 705 on a display.

Reference signs list

| | |
|---|---|
| 100 | recommender system |
| 101 | inherent interest analyzer |
| 102 | social influence analyzer |
| 103 | recommendation suggestion analyzer |
| 104 | recommendation generator |
| 200 | recommender system |
| 201 to 203 | user device |
| 204 | recommendation engine |
| 205 | output module |
| 206 | recommendation item database |
| 300 | graphical representation of user profile |
| 301 to 305 | tolerance intervals |
| 401 | tolerance interval |
| 402 | common area of all tolerance intervals |
| 403 | average of property value |
| 404 | average of average values |
| 501 A to 501E | segments of property values |
| 701 to 705 | method steps |

**Claims**

1. Method for operating a recommender system (100) generating recommendations for products for a plurality of users, wherein the system is communicatively connected with a storage and a database (206), wherein the database stores property value collections of products, wherein the storage contains individual user profiles for each user of the system, wherein each user profile (300) is composed of a plurality of tolerance intervals (401, 501) of property values and wherein each interval describes an acceptable range of the respective property value, the method comprising

　　- correlating (701) the property values of products with all individual user profiles;

　　- selecting (702) a group of users;
　　- identifying (703) a range for each property value which is acceptable for the maximum number of users of the selected group of users;
　　- selecting (704) products from the database having a corresponding property value contained in the identified range; and
　　- displaying (705) graphical representations of the selected products on a display.

2. Method according to claim 1, wherein the method further comprises providing access to the selected products.

3. Method according to claim 1, further comprising

　　- associating each property value with a numeric value characterizing a property of the product.

4. Method according to claim 1, wherein the method further comprises

　　- replacing a tolerance interval of property values in a user profile by a place holder if not enough data are available to determine the tolerance interval (401, 501).

5. Method according to claim 1, further comprising

　　- enabling manual selection of default values for tolerance intervals (401, 501) composing a user profile.

6. Method according to claim 1, further comprising

　　- replacing a currently still unknown tolerance interval in one user profile (300) for a property value by the allowed range of the property value.

7. Method according to claim 1, further comprising

　　- replacing a currently still unknown tolerance interval in one user profile (300) for a property value by the average values of the lower and upper limits of tolerance intervals (401, 501) known from other user profiles.

8. Method according to claim 1, further comprising

　　- receiving a special user request identifying at least one property value;
　　- permitting a deviation of the at least one identified property value outside the tolerance interval (401, 501) to maximize the number of users.

9. Computer program comprising program code instructions executable by a processor for implementing the steps of a method according to at least one

**EP 3 096 276 A1**

of claims 1 to 8.

**10.** Recommender system (100) facilitating access to data items, wherein the system is communicatively connected with a storage and a database (206), wherein the database stores property value collections of products, wherein the storage contains individual user profiles (300) for each user of the system, wherein each user profile is composed of a plurality of tolerance intervals (401, 501) of property values, and wherein each interval describes an acceptable range of the respective property value, the system comprises a processor which is adapted for

- correlating property (701) values of products with all individual user profiles;
- selecting (702) a group of users;
- identifying (703) a range for each property value which is acceptable for the maximum number of users of the selected group of users;
- selecting (704) products from the database having a corresponding property value contained in the identified range; and
- displaying (705) graphical representations of the selected products on the display.

100

101 — Inherent interest analyzer

102 — Social influence analyzer

103 — Recommendation suggestion analyzer

104

Recommendation generator

101

Output module

Fig.1

204

201 — User interface device 1

202 — ...

203 — User interface device M

Recommendation engine

205

Social network

206 — Recommendation item database

Fig.2

Fig.3

Fig.4

Fig.5

Fig.6

Correlating property
values with individual
user profiles                  701

Selecting a group
of users                       702

Identifying a range
for each property              703
value

Selecting products
from a data base               704

Displaying graphical
representations of             705
selected products

Fig.7

Europäisches
Patentamt

European
Patent Office

Office européen
des brevets

# EUROPEAN SEARCH REPORT

Application Number

EP 15 30 5757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/157997 A2 (UNITED VIDEO PROPERTIES INC [US]) 30 December 2009 (2009-12-30) * abstract; figure 2 * * paragraph [0002] - paragraph [0014] * * paragraph [0028] - paragraph [0031] * * paragraph [0037] - paragraph [0061] * ----- | 1-10 | INV. G06Q30/02 |
| X | EP 2 701 111 A1 (TNO [NL]) 26 February 2014 (2014-02-26) * paragraph [0009] - paragraph [0013] * * abstract * * paragraph [0015] - paragraph [0045] * ----- | 1-10 | |
| X | US 2012/180107 A1 (GAMMILL KEVIN [US] ET AL) 12 July 2012 (2012-07-12) * abstract; figure 2 * * paragraph [0008] - paragraph [0048] * ----- | 1-10 | |

TECHNICAL FIELDS
SEARCHED (IPC)

G06Q

The present search report has been drawn up for all claims

| Place of search | Date of completion of the search | Examiner |
|---|---|---|
| Munich | 4 September 2015 | Lopes Margarido, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5757

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2015

| Patent document cited in search report | | | Publication date | Patent family member(s) | | | Publication date |
|---|---|---|---|---|---|---|---|
| WO 2009157997 | A2 | | 30-12-2009 | US | 2009328105 | A1 | 31-12-2009 |
| | | | | US | 2013305290 | A1 | 14-11-2013 |
| | | | | WO | 2009157997 | A2 | 30-12-2009 |
| EP 2701111 | A1 | | 26-02-2014 | EP | 2701111 | A1 | 26-02-2014 |
| | | | | US | 2015186934 | A1 | 02-07-2015 |
| | | | | WO | 2014031002 | A1 | 27-02-2014 |
| US 2012180107 | A1 | | 12-07-2012 | NONE | | | |

EPO FORM P0459

For more details about this annex : see Official Journal of the European Patent Office, No. 12/82